Europäisches Patentamt

European Patent Office

Office européen des brevets

(11) Numéro de publication: **0 418 138 A1**

# (12) DEMANDE DE BREVET EUROPEEN

(21) Numéro de dépôt: 90402487.4

(22) Date de dépôt: **11.09.90**

(51) Int. Cl.⁵: **F17C  3/06**, B64G 1/40

(30) Priorité: **12.09.89 FR 8911917**

(43) Date de publication de la demande:
**20.03.91 Bulletin  91/12**

(84) Etats contractants désignés:
**DE ES GB IT NL**

(71) Demandeur: **AEROSPATIALE Société
Nationale Industrielle
37, Boulevard de Montmorency**

**F-75781 Paris Cédex 16(FR)**

(72) Inventeur: **Le Touche, Roger
5, rue du Beauregard
F-78920 Ecquevilly(FR)**

(74) Mandataire: **Rinuy, Santarelli
14, avenue de la Grande Armée
F-75017 Paris(FR)**

(54) Voile suspendu pour isolation thermique d'ergoles cryogéniques.

(57) L'invention consiste en un réservoir double avec un réservoir inférieur (1) au-dessus duquel est superposé un réservoir supérieur (2), séparés entre eux par une paroi d'isolation thermique, dans lequel ladite paroi d'isolation thermique est une paroi double comportant une cloison rigide supérieure (3) et un voile inférieur (4), côté réservoir inférieur, qui est perméable aux gaz, mais étanche au liquide destiné à être contenu dans le réservoir inférieur, lesdits cloison rigide et voile étant maintenus écartés l'un de l'autre.

FIG.1

EP 0 418 138 A1

# VOILE SUSPENDU POUR ISOLATION THERMIQUE D'ERGOLS CRYOGÉNIQUES

La présente invention concerne une paroi formant isolant thermique pour séparer des produits.

Dans certains domaines où il est indispensable de superposer deux réservoirs renfermant deux produits différents, il est également indispensable de maintenir une isolation thermique appropriée entre lesdits réservoirs lorsque ceux-ci renferment des produits à des températures telles qu'un échange de chaleur, même limité, entre ces deux produits pourrait conduire à des inconvénients importants occasionnés notamment par le changement d'état physique de l'un des produits comme la formation de cristaux ou de vapeur, à partir d'un produit, liquide à l'origine, provoquant par exemple le bouchage de micro-canalisations ou une dangereuse surpression.

Il peut être aussi impératif d'avoir ces deux réservoirs superposés et d'avoir cependant un volume et un poids de l'ensemble réduits au maximum.

Dans ces conditions, la solution classique à ce problème consistant à séparer deux réservoirs classiques par une virole, le gaz contenu dans l'intervalle situé entre ces deux réservoirs servant d'isolant thermique n'est pas satisfaisante. Le volume de gaz- important séparant les deux réservoirs n'est pas utilisable et est ainsi perdu.

On pourrait également isoler des réservoirs en collant sur le fond commun une mousse polyuréthanne ou polyisocyanate. Cependant, lorsque les produits ainsi isolés l'un de l'autre sont à des températures cryogéniques, par exemple en dessous de $100°K$ mais différentes, une telle isolation n'est pas acceptable car ladite mousse se fissure rapidement et perd toute efficacité.

C'est pourquoi la présente demande a pour objet un réservoir double avec un réservoir inférieur au-dessus duquel est superposé un réservoir supérieur, séparés entre eux par une paroi d'isolation thermique, carac térisé en ce que ladite paroi d'isolation thermique est une paroi double comportant une cloison rigide supérieure et un voile inférieur, côté réservoir inférieur, qui est perméable aux gaz, mais étanche au liquide destiné à être contenu dans le réservoir inférieur, lesdits cloison rigide et voile étant maintenus écartés l'un de l'autre.

Par "cloison rigide", l'on entend une cloison substantiellement indéformable dont les caractéristiques sont adaptées à son utilisation de base d'un réservoir. Sa résistance et sa matière seront donc calculées en fonction de la qualité et de la quantité du produit que renfermera le réservoir.

Ladite cloison sera en général métallique et, dans la mesure où l'on cherche à minimiser le poids, réalisée en alliage léger mais toutefois résistant. Elle pourra bien sûr être d'une autre matière et'ou traitée, par exemple pour contenir un acide ou autre produit corrosif.

Par "écartés l'un de l'autre", l'on entend que l'écartement du voile par rapport à la cloison rigide ménage un espace ; compte tenu de la perméabilité aux gaz du voile, cet espace sera rempli d'un gaz qui pourra être de même nature que le liquide inférieur, par exemple hydrogène gazeux lorsque le réservoir inférieur contient de l'hydrogène liquide.

Cet écartement sera de préférence faible afin de limiter les turbulences de gaz entre le voile et le fond. Dans le cas d'un réservoir sphérique de 5 m de diamètre, par exemple cet écartement pourra aller de 10 à 20mm. Cet écartement pourra être maintenu par tous moyens et notamment à l'aide d'entretoises.

Dans la mesure où l'on souhaite à volume égal de l'ensemble permettre une contenance maximum du réservoir inférieur relié avec une isolation suffisante conférée par l'espace séparant cloison et voile, l'écartement séparant la cloison rigide et le voile est maintenu constant sur toute la surface de la paroi double.

Par "maintenu constant", l'on entend que la distance séparant la cloison et le voile est substantiellement régulière et donc par exemple que le voile est substantiellement parallèle à la cloison si celle-ci est plate.

Dans d'autres conditions préférentielles de réalisation de l'invention, le voile a un coefficient de dilatation ou de rétraction proche de celui de la cloison rigide. Une telle caractéristique permet de diminuer les contraintes s'exerçant sur le voile et donc, éventuellement, de jouer sur son poids, son épaisseur, ou sur la distance vis-à-vis de la cloison.

Lorsque l'on utilise des supports, notamment des entretoises, la distance séparant les différents supports entre eux peut être calculée en relation avec les caractéristiques du voile et en fonction des contraintes auxquelles sera soumis ce dernier, par exemple une dépressurisation rapide du réservoir inférieur, occasionnant donc une surpression du gaz maintenu entre le voile et la cloison.

Ces supports sont avantageusement fixés à la cloison. Ils sont également avantageusement fixés au voile.

Cette fixation peut être de tout type connu et notamment réalisée par collage.

Cette fixation peut être mixte en ce sens que, par exemple, la fixation du support à la paroi pourra être réalisée par collage et la fixation du voile au support par rivets, vis, etc. ou inversement.

La fixation du voile au support peut également être renforcée de manière que les contraintes s'exerçant sur le voile soient réparties de manière à éviter par exemple une déchirure au niveau de la fixation.

La paroi selon la présente invention peut être plate. Cependant, dans le cas où l'on a un réservoir supérieur de volume important, il est avantageux que la cloison rigide ait une forme sensiblement hémisphérique. Dans ce cas, le voile est situé du côté convexe, c'est-à-dire en dessous de ladite cloison rigide. Une telle configuration est illustrée plus loin.

Lorsque l'on souhaite des réservoirs de grand volume et/ou très résistants, ceux-ci sont avantageusement réalisés en métal. Ils sont alors de préférence réalisés en alliage métallique léger, de même que la cloison rigide de la paroi selon l'invention.

Le voile peut être par exemple réalisé à partir d'un tissage métallique, de préférence du même métal que la cloison rigide, lorsque celle-ci est métallique.

Ce tissage métallique est alors traité à l'aide d'un produit de manière avoir une certaine imperméabilité aux liquides, tout en conservant leur perméabilité aux gaz. La résistance du voile peut être calculée en fonction des contraintes qu'il devra subir.

On peut également utiliser un tissu de verre par exemple enduit de PTFE. Des exemples de tels produits convenables pour le voile sont par exemple ceux commercialisé par la société Fothergill sous la référence TYGAVAC poreux.

La présente invention sera mieux comprise si l'on se réfère aux dessins annexés, sur lesquels :

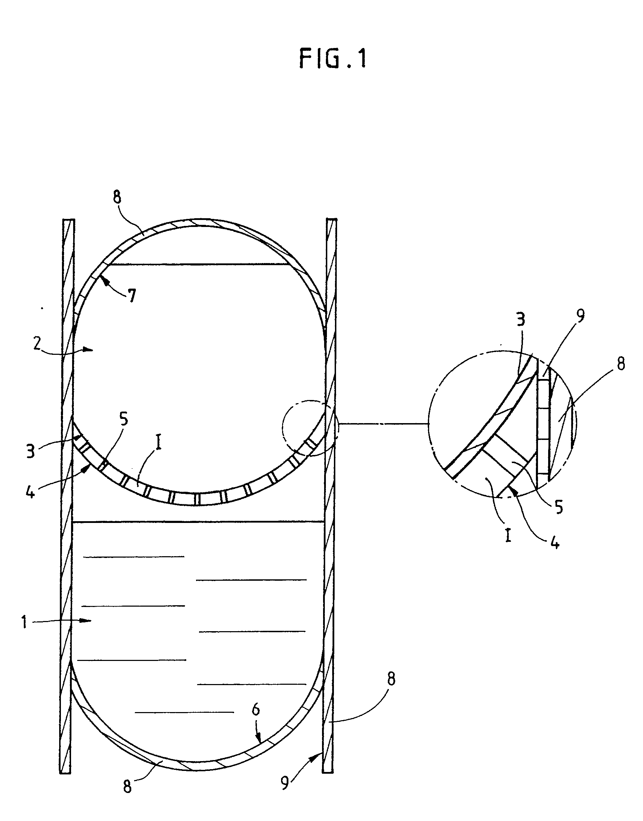

- la figure 1 illustre une paroi selon la présente invention isolant l'un de l'autre deux réservoirs. On peut distinguer en 1 le réservoir inférieur contenant le liquide, en 2 le réservoir contenant le produit à l'état liquide ou solide. La cloison rigide 3 est séparée du voile 4 par des supports 5 ménageant ainsi un intervalle I susceptible de se remplir de gaz. On distingue également la cloison inférieure 6 du réservoir inférieur et la cloison supérieure 7 du réservoir supérieur qui peuvent être isolées par exemple par une mousse polyuréthanne 8 vis-à-vis de l'air extérieur. Les parois latérales 9 comprennent elles aussi un isolant 8.

La perméabilité au gaz du voile peut être par exemple quantifiée par mesure de perte de charge ou mesure de vitesse de retour à un équilibre de pression après dépressurisation rapide.

L'imperméabilité aux liquides est difficile à quantifier avec précision, uniquement par calcul : de nombreux paramètres doivent en effet être pris en compte (tolérance sur le tissage, mouillabilité, rétraction). Le choix du voile sera effectué de préférence au vu du résultat d'essais.

Un tel essai peut être réalisé comme suit : on enfonce dans le liquide inférieur (par exemple de l'hydrogène liquide) un tube à l'origine ouvert aux deux extrémités, mais dont l'orifice inférieur est obturé par le voile à tester. En faisant varier par exemple la masse du tube d'essai, il est possible de quantifier avec précision une force d'imperméabilité.

Exemple d'utilisation de la présente invention

On prend un réservoir cryogénique $H_2$, $O_2$ liquides avec un fond commun. Le réservoir est en alliage d'aluminium.

Une matière adaptée pour le voile est un tissu de verre enduit de PTFE. En effet, ce tissu possède un coefficient de rétraction très voisin de celui de l'alliage d'aluminium utilisé et sa porosité est facilement obtenue et contrôlée en fabrication industrielle, selon des méthodes connues en elles-mêmes.

Le type de tissage et l'enduction en PTFE doivent prendre en compte :
- la vitesse de pressurisation et de dépressurisation du réservoir $H_2$ liquide ;
- l'imperméabilité au $H_2$ liquide.

La force d'imperméabilité nécessaire (en poids par unité de surface) doit être égale ou supérieure au poids par unité de surface du liquide placé au dessus du tissu. Dans la configuration explicitée par le croquis donné en annexe, le voile ne peut être mouillé que par des projections en cours de remplissage ou par le déplacement du liquide en vol en apesanteur, c'est-à-dire avec un poids nul. La force d'imperméabilité nécessaire devra donc uniquement être supérieure à zéro.

**Revendications**

1. Réservoir double avec un réservoir inférieur au-dessus duquel est superposé un réservoir supérieur, séparés entre eux par une paroi d'isolation thermique, caractérisé en ce que ladite paroi d'isolation thermique est une paroi double comportant une cloison rigide (3) supérieure et un voile inférieur (4), côté réservoir inférieur, qui est perméable aux gaz, mais étanche au liquide destiné à être contenu dans le réservoir inférieur, lesdits cloison rigide (3) et voile (4) étant maintenus écartés l'un de l'autre.

2. Réservoir double selon la revendication 1, caractérisé en ce que l'écartement de la cloison rigide (3) et du voile (4) est faible.

3. Réservoir double selon la revendication 1 ou 2, caractérisé en ce que l'écartement est maintenu à l'aide d'entretoises.

4. Réservoir double selon l'une quelconque des revendications 1 à 3, caractérisé en ce que l'écartement entre la cloison rigide (3) et le voile (4) est maintenu constant sur toute la surface de la paroi double.

5. Réservoir double selon l'une quelconque des revendications 1 à 4, caractérisé en ce que le voile (40) présente un coefficient de dilatation proche de celui de la cloison rigide (3).

6. Réservoir double selon l'une quelconque des revendications 1 à 5, caractérisé en ce que les supports sont fixés notamment par collage à la cloison (3) et/ou au voile (4).

7. Réservoir double selon l'une quelconque des revendications 1 à 6, caractérisé en ce que la cloison rigide (3) a une forme hémisphérique, le voile (4) étant situé du côté convexe.

FIG.1

Office européen
des brevets

**RAPPORT DE RECHERCHE
EUROPEENNE**

Numéro de la demande

**EP 90 40 2487**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 096 139  (MARTIN MARIETTA)<br>* Revendications 1-8; figures 1-5 *<br>– – – | 1-7 | F 17 C 3/06<br>B 64 G 1/40 |
| A | FR-A-2 111 455  (MARTIN MARIETTA)<br>* Revendications 1-12; figures 1-5 *<br>– – – | 1-7 | |
| A | US-A-3 756 024  (GAY)<br>* Colonne 2, lignes 47,55; figure 3 *<br>– – – – – | 1-7 | |

|  |
|---|
| DOMAINES TECHNIQUES RECHERCHES (Int. Cl.5) |
| F 17 C<br>B 64 G |

Le présent rapport de recherche a été établi pour toutes les revendications

| Lieu de la recherche | Date d'achèvement de la recherche | Examinateur |
|---|---|---|
| La Haye | 10 novembre 90 | MEERTENS J. |

CATEGORIE DES DOCUMENTS CITES
X : particulièrement pertinent à lui seul
Y : particulièrement pertinent en combinaison avec un
  autre document de la même catégorie
A : arrière-plan technologique
O : divulgation non-écrite
P : document intercalaire
T : théorie ou principe à la base de l'invention

E : document de brevet antérieur, mais publié à la
  date de dépôt ou après cette date
D : cité dans la demande
L : cité pour d'autres raisons
-------------------------------------------------------------
& : membre de la même famille, document
  correspondant